# EUROPÄISCHE PATENTSCHRIFT

(11) **EP 3 283 555 B1**
(45) Veröffentlichungstag und Bekanntmachung des Hinweises auf die Patenterteilung: **04.12.2019**
(21) Anmeldenummer: 16719044.6
(22) Anmeldetag: 13.04.2016
(51) Int. Cl.: C08J 3/24, C08J 5/04, C08J 9/00, C08J 5/10

(54) **VERFAHREN ZUR ZÄHMODIFIZIERUNG VON DUROPLASTEN**
METHOD FOR IMPACT MODIFICATION OF DUROPLASTICS
PROCÉDÉ DE MODIFICATION D'IMPACT DE MATIÈRES THERMODURCISSABLES

(30) Priorität: 14.04.2015 EP 15163555
(43) Veröffentlichungstag der Anmeldung: 21.02.2018
(73) Patentinhaber: BASF SE, 67056 Ludwigshafen am Rhein (DE)
(72) Erfinder: WEBER, Martin, 67487 Maikammer (DE); MALETZKO, Christian, 67122 Altrip (DE); HENNENBERGER, Florian, 64646 Heppenheim (DE); WILMS, Axel, 67227 Frankenthal (DE)
(74) Vertreter: BASF IP Association
(86) Internationale Anmeldenummer: PCT/EP2016/058131
(87) Internationale Veröffentlichungsnummer: WO 2016/166166

(56) Entgegenhaltungen:
- EP-A1- 1 446 452
- DE-T2- 60 126 345

## Beschreibung

Die vorliegende Erfindung betrifft ein Verfahren zur Herstellung von duroplastischen Formteilen, die duroplastischen Formteile selbst, die Verwendung der duroplastischen Formteile als Bauteile sowie die Verwendung eines thermoplastischen Polymers mit einer Porosität im Bereich von 10 bis 90 % zur Erhöhung der Zähigkeit eines Duroplasten.

Duroplastische Formteile auf Basis von duroplastisch vernetzbaren Harzsystemen sowie Verfahren zu deren Herstellung sind an sich bekannt. Die duroplastischen Formteile enthalten häufig Verstärkungsmaterialien (Verstärkungsstoffe) wie Fasern, Gewebe oder Gelege, wobei der Duroplast in diesem Fall die Matrix bildet. Duroplastische Formteile zeichnen sich durch exzellente Materialeigenschaften, bei im Vergleich zu Metallen deutlich reduzierter Dichte aus. Duroplastische Formteile zeichnen sich durch hohe, in weiten Bereichen temperaturunabhängige Steifigkeit aus. Ein weiterer Vorteil von duroplastischen Formteilen ist deren hohe Härte sowie gute Temperatur-, Chemikalien-, Witterungs- und Wärmeformbeständigkeit. Duroplastische Formteile finden daher weitverbreiteten Einsatz, beispielsweise in der Elektrotechnik, Automobil- und Flugzeugtechnik, im Bau von Windkraftanlagen sowie im Bauwesen.

Ein wesentlicher Nachteil von duroplastischen Formteilen ist ihre vergleichsweise niedrige Zähigkeit, welche eine Konsequenz der hohen Vernetzungsdichte ist.

Zur Erhöhung der Zähigkeit, insbesondere zur Erhöhung der Schlagzähigkeit, beschreibt die EP 1 446 452 B1 den Einsatz von thermoplastischen Polyarylenethersulfonen.

In der EP 1 446 452 B1 wird die Verbesserung der Schlagzähigkeit eines duroplastisch vernetzbaren Epoxidharzsystems beschrieben. Das duroplastische Epoxidharzsystem wird dabei aus einer mindestens bi-funktionellen Epoxidverbindung, einem Härter und einem Härtungsbeschleuniger gebildet. Als Thermoplasten kommen Polyarylenethersulfone zum Einsatz. Das Einbringen des thermoplastischen Polyarylenethersulfons erfolgt dabei wie folgt. Die Epoxidverbindung und der Härter werden vorgelegt und erhitzt. Nachfolgend wird das thermoplastische Polyarylenethersulfon zu der Mischung aus Epoxidverbindung und Härter zugegeben. Anschließend wird solange unter Erhitzen gerührt, bis sich das thermoplastische Polyarylenethersulfon vollständig in der Mischung aus Epoxidverbindung und Härter aufgelöst hat. Danach wird der Härtungsbeschleuniger zugesetzt.

Nachteilig an diesem Verfahren ist der hohe Zeitaufwand, der für das Auflösen des thermoplastischen Polyarylenethersulfons erforderlich ist. Darüber hinaus wird das thermoplastische Polyarylenethersulfon während des Auflösens einer thermischen Belastung ausgesetzt, was zu einer Verschlechterung der Eigenfarbe führen kann. Bei dem Verfahren gemäß EP 1 446 452 B1 kann zudem bereits vor dem Einspritzen des duroplastisch härtbaren Epoxidharzsystems in das Formwerkzeug eine deutliche Viskositätserhöhung auftreten, wodurch das Einbringen des duroplastisch härtbaren Epoxidharzsystems in das Formgebungswerkzeug erschwert wird.

Die DE 601 26 345 offenbart pulverförmige härtbare Harzzusammensetzungen, die nach der Härtung verbesserte Wärmebeständigkeit, Steifheit und Festigkeit aufweisen. Die härtbare Harzzusammensetzung enthält dabei einen thermoplastischen Polyarylenether und Allyl- sowie Acryloylmonomere, die duroplastisch aushärten können. Der thermoplastische Polyarylenether wird dabei zusammen mit dem Allylmonomer in einem Lösungsmittel erhitzt bis er sich vollständig aufgelöst hat und anschließend mit dem Acryloylmonomer versetzt und abgekühlt. Die abgekühlte, gehärtete und wachsartige Lösung wird anschließend in flüssigem Stickstoff gekühlt, zermahlen und mit einem Härtungsbeschleuniger versetzt.

Ähnlich zu dem in EP 1 446 452 offenbarten Verfahren, erfordert das Lösen des thermoplastischen Polyarylenethers in dem Verfahren gemäß DE 601 26 345 einen hohen Zeitaufwand sowie hohe Temperaturen, die die Eigenfarbe des modifizierten Duroplasten verschlechtern können.

Eine weitere Möglichkeit, thermoplastische Polymere in duroplastische Formteile einzubringen, besteht darin, das thermoplastische Polymer in Form einer dünnen Folie bereitzustellen und diese Folie auf den im Formwerkzeug enthaltenen Verstärkungsstoff aufzulegen. Nachfolgend werden Verstärkungsstoff und Folie in dem Formwerkzeug mit einem duroplastisch vernetzbaren Harzsystem umspritzt oder infiltriert.

Bei diesem Verfahren werden Formteile erhalten, die eine mangelhafte Eigenfarbe und eine unzureichende Kerbschlagzähigkeit aufweisen.

Der vorliegenden Erfindung liegt somit die Aufgabe zugrunde, ein Verfahren zur Herstellung von duroplastischen Formteilen bereitzustellen, die akzeptable Kerbschlagzähigkeiten und geringe Eigenfarbe aufweisen. Das Verfahren soll darüber hinaus einfach und zeiteffizient durchführbar sein. Das Verfahren soll die im Stand der Technik beschriebenen Nachteile ausräumen, oder diese zumindest in verringertem Maße aufweisen. Das Verfahren soll darüber hinaus zeit- und kosteneffizient durchführbar sein.

Gelöst wird diese Aufgabe durch ein Verfahren zur Herstellung eines duroplastischen Formteils umfassend die Schritte
a) Bereitstellen eines duroplastisch vernetzbaren Harzsystems in einem Formwerkzeug,
b) Vernetzen des in Schritt a) bereitgestellten duroplastisch vernetzbaren Harzsystems in dem Formwerkzeug in Gegenwart eines thermoplastischen Polymers, das eine Porosität von 10 bis 90 % aufweist, unter Erhalt des duroplastischen Formteils,
c) Entnahme des duroplastischen Formteils aus dem Formwerkzeug.

Gegenstand der vorliegenden Erfindung ist darüber hinaus ein duroplastisches Formteil, das nach dem vorstehend genannten Verfahren erhältlich ist.

Gegenstand der vorliegenden Erfindung ist darüber hinaus die Verwendung eines thermoplastischen Polymers, das eine Porosität von 10 bis 90 % aufweist, zur Erhöhung der Zähigkeit eines Duroplasten, bevorzugt zur Erhöhung der Zähigkeit eines duroplsatischen Formteils.

Unter "Erhöhung der Zähigkeit" wird erfindungsgemäß bevorzugt die Erhöhung der Kerbschlagzähigkeit nach ISO 180 verstanden.

Die Bestimmung der Kerbschlagzähigkeit erfolgt dabei an einem duroplastischen Formteil (mit einer Abmessung von 80 * 10 * 2 mm und Einbringen einer Kerbe mit einer Tiefe von 2 mm und einem Radius von 2,5 mm. Die Kerbe wird auf der Seite mit Kantenlängen 80 * 10 mm eingebracht.

Durch das erfindungsgemäße Verfahren wird die Zeit, die zur Auflösung des thermoplastischen Polymers benötigt wird, deutlich verkürzt. Das erfindungsgemäße Verfahren ist somit gegenüber den im Stand der Technik beschriebenen Verfahren deutlich zeiteffizienter und damit kostengünstiger durchführbar.

Die nach dem erfindungsgemäßen Verfahren erhältlichen duroplastischen Formteile weisen eine geringe Eigenfarbe bei gleichzeitig guter Kerbschlagzähigkeit, auf.

### Duroplastisch vernetzbares Harzsystem

Erfindungsgemäß werden unter "duroplastisch vernetzbaren Harzsystemen" Harzsysteme verstanden, die durch eine Polyadditionsreaktion zu Duroplasten (Duromeren) reagieren können. Bei der Polyadditionsreaktion vernetzen die im duroplastisch vernetzbaren Harzsystem enthaltenen Komponenten, wobei sich eine dreidimensional vernetzte (quervernetzte) Polymerstruktur (Duroplast) ausbildet. Die Polyadditionsreaktion, durch die sich das duroplastisch vernetzbare Harzsystem in dem Duroplasten umwandelt, wird auch als *"Aushärten"* bezeichnet. Das in Verfahrensschritt a) bereitgestellte duroplastisch vernetzbare Harzsystem liegt erfindungsgemäß nicht ausgehärtet oder nur teilweise ausgehärtet vor. Das in Verfahrensschritt b) bzw. c) erhaltene duroplastische Formteil (Duroplast) liegt erfindungsgemäß ausgehärtet, bevorzugt vollständig ausgehärtet vor.

Unter "ausgehärtet" wird erfindungsgemäß ein Reaktionsfortschritt der Polyaddition im Bereich von 90 bis 98 % verstanden. Unter "vollständig ausgehärtet" wird erfindungsgemäß ein Reaktionsfortschritt der Polyaddition im Bereich von > 98 % bis 100% verstanden. Unter "nicht ausgehärtet" wird erfindungsgemäß ein Reaktionsfortschritt der Polyaddition im Bereich von 0 bis 5 % verstanden. Unter "nur teilweise ausgehärtet" wird erfindungsgemäß ein Reaktionsfortschritt von > 5 bis 50 % verstanden.

Erfindungsgemäß können alle dem Fachmann bekannten duroplastisch vernetzbaren Harzsysteme eingesetzt werden. Geeignete duroplastisch vernetzbare Harzsysteme sind beispielsweise ausgewählt aus der Gruppe bestehend aus duroplastisch vernetzbaren Epoxid-Harzsystemen, duroplastisch vernetzbaren Harnstoff-Formaldehyd-Harzsystemen, duroplastisch vernetzbaren Melamin-Formaldehyd-Harzsystemen, duroplastisch vernetzbaren Melamin-Phenol-Formaldehydharzsystemen, duroplastisch vernetzbaren Phenol-Formaldehyd-Harzsystemen und duroplastisch vernetzbaren Bismaleinimid-Harzsystemen.

Gegenstand der vorliegenden Erfindung ist somit auch ein Verfahren, bei dem das in Verfahrensschritt a) bereitgestellte duroplastisch vernetzbare Harzsystem ausgewählt ist aus der Gruppe bestehend aus duroplastisch vernetzbaren Epoxid-Harzsystemen, duroplastisch vernetzbaren Harnstoff-Formaldehyd-Harzsystemen, duroplastisch vernetzbaren Melamin-Formaldehyd-Harzsystemen, duroplastisch vernetzbaren Melamin-Phenol-Formaldehydharzsystemen, duroplastisch vernetzbaren Phenol-Formaldehyd-Harzsystemen und duroplastisch vernetzbaren Bismaleinimid-Harzsystemen.

Erfindungsgemäß bevorzugt werden in Verfahrensschritt a) duroplastisch vernetzbare Epoxidharzsysteme bereitgestellt. Das bevorzugt in Verfahrensschritt a) bereitgestellte duroplastisch vernetzbare Epoxidharzsystem liegt erfindungsgemäß ebenfalls in nicht ausgehärtetem oder nur teilweise ausgehärtetem Zustand vor, wobei die vorstehend genannten Definitionen und Bevorzugungen zum duroplastisch vernetzbaren Harzsystem entsprechend gelten.

Geeignete duroplastische vernetzbare Epoxidharzsysteme enthalten als Komponente (A) mindestens eine Epoxidverbindung (E), die mindestens eine Epoxidgruppe pro Molekül aufweist und als Komponente (B) mindestens einen Härter (H).

Gegenstand der vorliegenden Erfindung ist somit auch ein Verfahren zur Herstellung eines duroplastischen Formteils, bei dem das in Verfahrensschritt a) bereitgestellte duroplastisch vernetzbare Harzsystem ein Epoxidharzsystem ist, das die folgenden Komponenten enthält:
(A) mindestens eine Epoxiverbindung (E), die mindestens eine Epoxidgruppe pro Molekül aufweist, und
(B) mindestens einen Härter (H).

### Epoxidverbindung (E)

Vorzugsweise weist die Epoxidverbindung (E) mindestens zwei Epoxidgruppen pro Molekül auf.

Noch mehr bevorzugt ist die Epoxidverbindung (E) ein auf Bisphenolen gemäß der allgemeinen Formel (II) basierender Bisglycidylether, 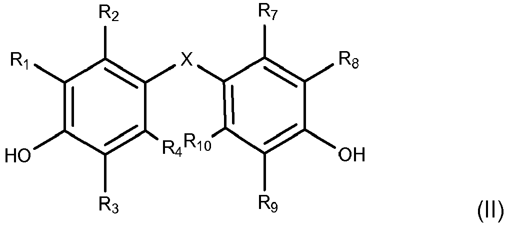 wobei
R¹ bis R⁴ und R⁷ bis R¹⁰ sind unabhängig voneinander H, C₁-C₆-Alkyl, Aryl, Halogen oder C₂-C₁₀-Alkenyl, wobei R¹ bis R⁴ und R⁷ bis R¹⁰ auch Teil eines Ringsystems sein können;
X ist CR⁵R⁶ oder SO₂;
sofern X gleich CR⁵R⁶ ist, dann sind R⁵ und R⁶ unabhängig voneinander H, Halogen, C₁-C₆-Alkyl, C₂-C₁₀-Alkenyl oder Aryl oder R⁵ und R⁶ können auch Teil eines Ringsystems sein. Ein Ringsystem kann zum Beispiel ein Cyclohexanring sein.

Gegenstand der vorliegenden Erfindung ist somit auch ein Verfahren, bei dem die Epoxidverbindung (E) ein auf Bisphenolen gemäß der allgemeinen Formel (II) basierender Bisglycidylether ist.

Bisglycidylether lassen sich nach dem Fachmann bekannten Methoden ausgehend von Bisphenolen gemäß der allgemeinen Formel (II) durch Umsetzung mit Epichlorhydrin herstellen.

Noch mehr bevorzugt ist die Epoxidverbindung (E) in einer weiteren Ausführungsform ausgewählt aus der Gruppe Tetraglycidylmethylendianiline (TGMDA), Epoxy-Novolaken (den Reaktionsprodukten aus Epichlorhydrin und Phenolharzen (Novolak)) und cycloaliphatischen Epoxidharzen wie 3,4-Epoxycyclohexylmethyl-3,4-epoxycyclohexancarboxylat und Hexahydrophthalsäurediglycidylester.

Noch mehr bevorzugt ist die Epoxidverbindung (E) in einer weiteren Ausführungsform ausgewählt aus der Gruppe Dicarbonsäuren oder Monocarbonsäuren, die zusätzlich eine Hydroxylgruppe aufweisen, und mit Epichlorhydrin umgesetzt wurden, wie p-Hydroxybenzoesäure, beta-Hydroxynaphthalinsäure, Polycarbonsäuren, Phthalsäure, Methylphthalsäure, Isophtalsäure, Terephthalsäure, Tetrahydrophthalsäure, Hexahydrophthalsäure, Endomethylentetrahydrophthalsäure, Endomethylenhexahydrophthalsäure, Benzol-1,2,4-tricarbonsäure, polymerisierte Fettsäuren.

Noch mehr bevorzugt ist die Epoxidverbindung (E) in einer weiteren Ausführungsform ein Epoxidharz vom Glycidylaminoglycidylethertyp, erhalten durch den Umsatz von Epichlorhydrin mit Verbindungen ausgewählt aus der Gruppe Aminophenol oder Aminomethyl-, Aminoethyl-, Aminopropyl-, Aminobutyl- oder Aminoisopropylphenol, Aminobenzoesäure, oder einem Glycidylamin erhalten aus Anilin, Toluidin, Tribromanillin, Xylendiamin, Diaminocyclohexan, Bisaminomethylcyclohexan, 4,4'-Diaminodiphenylmethan, oder 4,4'-Diaminodiphenylsulfon

Besonders bevorzugt ist die Epoxidverbindung (E) ein auf Bisphenolen basierender Bisglycidylether, bei dem die Bisphenole ausgewählt sind aus der Gruppe Bisphenol A (CAS: 80-05-7), Bisphenol AF (CAS: 1478-61-1), Bisphenol AP (CAS: 1571-75-1), Bisphenol B (CAS: 77-40-7), Bisphenol BP (CAS: 1844-01-5), Bisphenol C (CAS: 79-97-0), Bisphenol C (CAS: 14868-03-2), Bisphenol E (CAS: 2081-08-5), Bisphenol F (CAS: 620-92-8), Bisphenol FL (CAS: 3236-71-3), Bisphenol G (CAS: 127-54-8), Bisphenol M (CAS: 13595-25-0), Bisphenol P (CAS: 2167-51-3), Bisphenol PH (CAS: 24038-68-4), Bisphenol S (CAS: 80-09-1), Bisphenol TMC (CAS: 129188-99-4) und Bisphenol Z (CAS: 843-55-0).

Dabei bedeutet zum Beispiel "Bisphenol A (CAS: 80-05-7)", das Bisphenol A die CAS (Chemical Abstracts Service) -Nummer 80-05-7 zugeordnet ist. Über die Abfrage einer einschlägigen Datenbank wie "SciFinder" des Chemical Abstracts Service oder auch eine Internetrecherche kann der betreffenden Substanz über die Nummer eine eindeutige chemische Struktur oder auch IUPAC-Bezeichnung zugeordnet werden.

Im Rahmen der vorliegenden Erfindung bedeuten Definitionen wie "C₁C₆-Alkyl", wie beispielsweise für den Rest R¹ in Formel (II) definiert ist, dass dieser Substituent ein Alkylrest mit 1 bis 6 Kohlenstoffatomen ist. Dieser kann linear, verzweigt oder zyklisch sein. Beispiele für Alkylreste sind Methyl, Ethyl, Propyl, Butyl, Pentyl, Hexyl oder Cyclohexyl.

Im Rahmen der vorliegenden Erfindung bedeuten Definitionen wie "C₂-C₁₀-Alkenyl", wie beispielsweise für den Rest R¹ in Formel (II) definiert ist, dass dieser Substituent (Rest) ein Alkenylrest mit einer Kohlenstoffatomanzahl von 2 bis 10 ist. Dieser Kohlenstoffrest ist vorzugsweise einfach ungesättigt, gegebenenfalls kann er aber auch zwei-oder mehrfach ungesättigt sein. Hinsichtlich Linearität, Verzweigungen sowie zyklischer Anteile gelten die sinngemäßen Angaben wie vorstehend anhand der C₁C₃₀-AlkylReste definiert. Vorzugsweise ist C₂-C₁₀-Alkenyl im Rahmen der vorliegenden Erfindung Vinyl, 1-Allyl, 3-Allyl, 2-Allyl, cis- oder trans-2-Butenyl, ω-Butenyl.

Im Rahmen der vorliegenden Erfindung bedeutet der Begriff "Aryl", wie beispielsweise vorstehend für den Rest R¹ in Formel (II) definiert, dass der Substituent (Rest) ein Aromat ist. Bei dem Aromat kann es sich um einen monozyklischen, bizyklischen oder gegebenenfalls polyzyklischen Aromaten handeln. Im Fall von polyzyklischen Aromaten können gegebenenfalls einzelne Zyklen ganz oder teilweise gesättigt sein. Bevorzugte Beispiele für Aryl sind Phenyl, Naphthyl oder Anthracyl, insbesondere Phenyl.

### Härter (H)

Erfindungsgemäß bevorzugt enthält das duroplastisch vernetzbare Epoxidharzsystem mindestens einen Härter (H).

Geeignete Härter (H) sind beispielsweise beschrieben in B. Ellis, "Chemistry and Technology of Epoxy Resins" Blackie Academic & Profesional, 1993, S. 37 - 56. Geeignete Härter (H) sind beispielsweise ausgewählt aus der Gruppe bestehend aus Dicarbonsäureanhydriden und Aminen.

Als Amine sind beispielsweise geeignet aliphatische Amine, cycloaliphatische Amine, aromatische Amine, aliphatisch-aromatische Amine und Dicyanamide. Geeignet sind auch Polyetheramine, wobei die Polyethersegment bevorzugt aus Ethxlenoxid., Propylenoxid- bzw. Butylenoxid-Einheiten bestehen. Es können auch Mischungen unterschiedlicher Polyetheramine verwendet werden bzw. Mischungen von Polyetheraminen und anderen Aminen.

Weiterhin geeignet sind Polyamidoamine und Imidazoline.

Bevorzugte Härter (H) sind ausgewählt aus der Gruppe bestehend aus 1,3-Diaminbenzol, 2,6-bis-(Aminomethyl)piperidin, Diethylentriamin, Triethylentetramin, 4,4'-Diaminodiphenylsulfon. Phthalsäureanhydrid und Hexahydrophthalsäureanhydrid.

Als Härter geeignete Anhydride oder Säuren sind beschrieben in B. Ellis, ,, "Chemistry and Technology of Epoxy Resins" Blackie Academic & Profesional, 1993, S. 60 - 65. Bevorzugt werden Phthalsäureanhydrid und Hexahydrophthalsäureanhydrid verwendet.

Das Verhältnis von Epoxidverbindung (E) zu Härter (H), bezogen auf das Verhältnis der Epoxidgruppen in (E) zur Anzahl der substituierbaren Wasserstoffatome der Aminogruppen in Härter (H), kann prinzipiell beliebig gewählt werden.

Vorzugsweise wird das Verhältnis von Epoxidverbindung (E) zu Härter (H) so eingestellt, dass das Verhältnis der Anzahl der Epoxidgruppen in Epoxidverbindung (E) zur Anzahl der substituierbaren Wasserstoffatome der Aminogruppen in Härter (H) 0,2 : 1 bis 1 : 1 , mehr bevorzugt 0,33 : 1 bis 1 : 1 noch mehr bevorzugt 0,5 : 1 bis 1 : 1 oder vorzugsweise 1 : 0,2 bis 1 : 1, mehr bevorzugt 1 : 0,33 bis 1 : 1, noch mehr bevorzugt 1 : 0,5 bis 1 : 1, beträgt.

Bevorzugte stöchiometrische Verhältnisse für die Härtung von Epoxyharzen mit Anhydriden oder Dicarbonsäuren sind dem Fachmann bekannt.

Die Anzahl der Epoxidgruppen in der Epoxidverbindung (E) ist über das jeweilige EEW (engl.: epoxy equivalent weight) bestimmbar. Dabei bedeutet zum Beispiel ein EEW von 182, dass 182 g des Epoxidharzes 1 Mol Epoxidgruppen beinhalten.

Über die genannten Komponenten (A) und (B) hinaus kann das duroplastisch vernetzbare Epoxidharzsystem noch weitere Verbindungen enthalten, wie zum Beispiel Härtungsbeschleuniger ((HB) Komponente (C)) und/oder Reaktivverdünner ((RV; Komponente (D)).

Als Reaktivverdünner (RV) sind beispielsweise geeignet: 4-Butandiolbisglycidylether, 1,6-Hexandiolbisglycidylether, Glycidylneodecanoat, Glycidylversatat, 2-Ethylhexylglycidylether, C₈-C₁₀-Alkylglycidylether, C₁₂-C₁₄-Alkylglycidylether, p-tert-Butylglycidether, Butylglycidether, Nonylphenylglycidether, p-tert-Butylphenylglycidether, Phenylglycidether, o-Cresylglycidether, Polyoxypropylenglycoldiglycidether, Trimethylolpropantriglycidether (TMP), Glycerintriglycidether und Triglycidylparaaminophenol (TGPAP).

Als Härtungsbeschleuniger (HB) kann beispielsweise 2-Ethyl-4-methylimidazol eingesetzt werden. Weitere geeignet Härtungsbeschleuniger sind beschrieben in B. Ellis, "Chemistry and Technology of Epoxy Resins" Blackie Academic & Professional, 1993, S. 56 bis 61.

Weitere Bestandteile können Lösungsmittel wie zum Beispiel Benzylalkohol oder Aceton oder Katalysatoren wie Lewis-Säuren (zum Beispiel BF₃-Addukte), Lewis-Basen (beispielsweise Imidazole oder tertiäre Amine) oder Brönstedt-Säuren (zum Beispiel Methansulfonsäure) sein.

### Thermoplastisches Polymer mit einer Porosität von 10 bis 90 %

Erfindungsgemäß können alle thermoplastischen Polymere eingesetzt werden, die eine Porosität im Bereich von 10 bis 90%, bevorzugt im Bereich von 15 bis 85 und besonders bevorzugt im Bereich von 20 bis 80 aufweisen.

Unter "Porosität" wird erfindungsgemäß das Verhältnis von Hohlraumvolumen der im thermoplastischen Polymer enthaltenen Poren zum Gesamtvolumen des thermoplastischen Polymers verstanden.

Die Porosität des thermoplastischen Polymers wird erfindungsgemäß bestimmt durch Messung der Dichte des porösen thermoplastischen Polymers und Vergleich mit der Dichte des kompakten Polymers.

Geeignete thermoplastische Polymere sind beispielsweise ausgewählt aus der Gruppe bestehend aus Polyarylenethern, Polyphenylenethern, Polyetherimiden und Mischungen aus Polyarylenethern, Polyphenylenethern und Polyetherimiden. Gegenstand der vorliegenden Erfindung ist somit auch ein Verfahren, bei dem das thermoplastische Polymer ausgewählt ist aus der Gruppe bestehend aus Polyarylenethern, Polyphenylenethern, Polyetherimiden und Mischungen aus Polyaryenlethern, Polyphenylenethern und Polyetherimiden.

Das thermoplastische Polymer ist mindestens ein Polyarylenether (P), der aufgebaut ist aus Bausteinen der allgemeinen Formel (I) 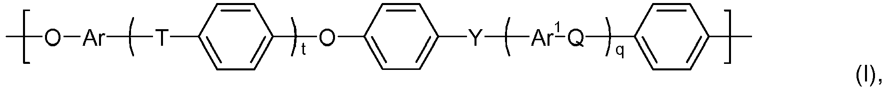 mit folgenden Bedeutungen:
- t, q:: unabhängig voneinander 0, 1, 2 oder 3,
- Q, T, Y:: unabhängig voneinander jeweils eine chemische Bindung oder Gruppe, ausgewählt aus -O-, -S-, -SO₂-, S=O, C=O, -N=N-, -CR^{a}R^{b}-, wobei R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei wenigstens eines aus Q, T und Y von -O- verschieden ist, und wenigstens eines aus Q, T und Y für -SO₂- steht und
- Ar, Ar¹:: unabhängig voneinander eine Arylengruppe mit von 6 bis 18 Kohlenstoffatomen.

Falls Q, T oder Y unter den oben genannten Voraussetzungen eine chemische Bindung ist, dann ist darunter zu verstehen, dass die links benachbarte und die rechts benachbarte Gruppe direkt miteinander über eine chemische Bindung verknüpft vorliegen.

Vorzugsweise werden Q, T und Y in Formel (I) allerdings unabhängig voneinander ausgewählt aus -O- und -SO₂-, mit der Maßgabe, dass wenigstens eines aus der Gruppe bestehend aus Q, T und Y für -SO₂- steht.

Sofern Q, T oder Y -CR^{a}R^{b}- sind, stehen R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe.

Bevorzugte C₁-C₁₂-Alkylgruppen umfassen lineare und verzweigte, gesättigte Alkylgruppen mit von 1 bis 12 Kohlenstoffatomen. Insbesondere sind folgende Reste zu nennen: C₁₋C₆-Alkylrest, wie Methyl, Ethyl, n-Propyl, i-Propyl, n-Butyl, sec.-Butyl, 2- oder 3-Methyl-pentyl und längerkettige Reste wie unverzweigtes Heptyl, Octyl, Nonyl, Decyl, Undecyl, Lauryl und die ein- oder mehrfach verzweigten Analoga davon.

Als Alkylreste in den vorgenannten einsetzbaren C₁-C₁₂-Alkoxygruppen kommen die weiter oben definierten Alkylgruppen mit von 1 bis 12 Kohlenstoffatomen in Betracht. Vorzugsweise verwendbare Cycloalkylreste umfassen insbesondere C₃-C₁₂-Cycloalkylreste, wie zum Beispiel Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclopentylethyl, -propyl, -butyl, -pentyl, -hexyl, Cyclohexylmethyl, -dimethyl, -trimethyl.

Ar und Ar¹ bedeuten unabhängig voneinander eine C₆-C₁₈-Arylengruppe. Ausgehend von den weiter unten beschriebenen Ausgangsprodukten ist Ar vorzugsweise abgeleitet von einer elektronenreichen, leicht elektrophil angreifbaren aromatischen Substanz, die bevorzugt aus der Gruppe bestehend aus Hydrochinon, Resorcin, Dihydroxynaphthalin, insbesondere 2,7-Dihydroxynaphthalin, und 4,4'-Bisphenol ausgewählt wird. Vorzugsweise ist Ar¹ eine unsubstituierte C₆- oder C₁₂-Arylengruppe. Als C₆-C₁₈-Arylengruppen Ar und Ar¹ kommen insbesondere Phenylengruppen, wie 1,2-, 1,3- und 1,4-Phenylen, Naphthylengruppen, wie beispielsweise 1,6-, 1,7-, 2,6- und 2,7-Naphthylen, sowie die von Anthracen, Phenanthren und Naphthacen abgeleiteten Arylengruppen in Betracht.

Vorzugsweise werden Ar und Ar¹ in der bevorzugten Ausführungsform gemäß Formel (I) unabhängig voneinander ausgewählt aus der Gruppe bestehend aus 1,4-Phenylen, 1,3-Phenylen, Naphthylen, insbesondere 2,7-Dihydroxynaphthalin, und 4,4'-Bisphenylen.

Im Rahmen des Polyarylenethers (P) vorzugsweise vorliegende Bausteine sind solche, die mindestens eine der folgenden wiederkehrenden Struktureinheiten la bis lo enthalten:

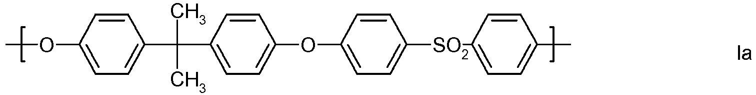

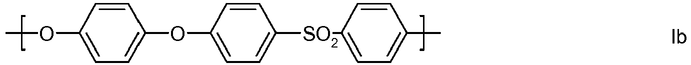

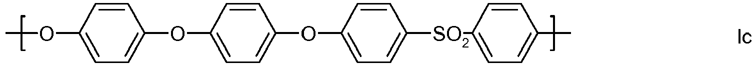

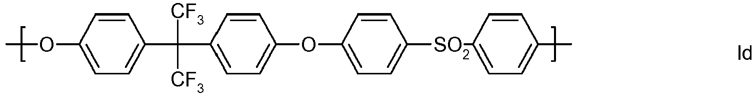

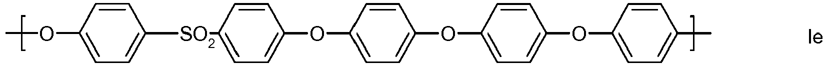

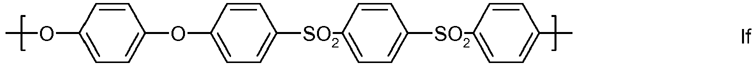

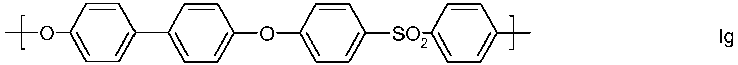

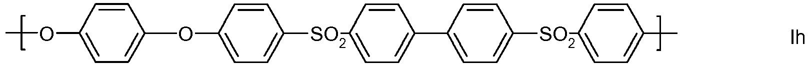

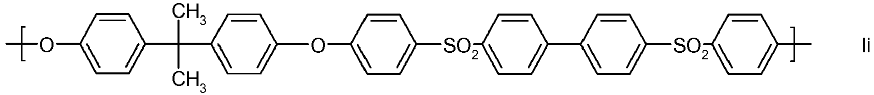

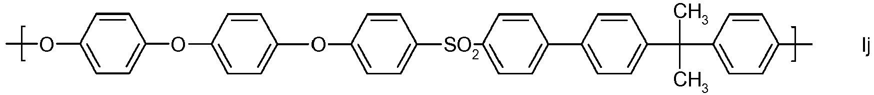

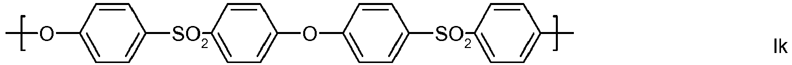

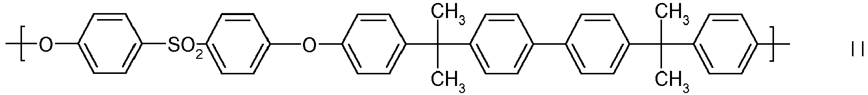

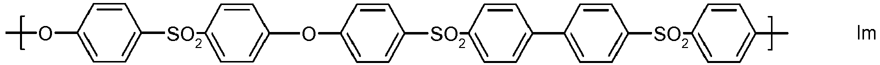

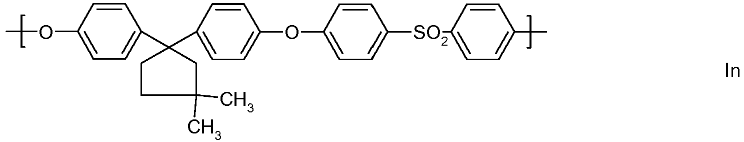

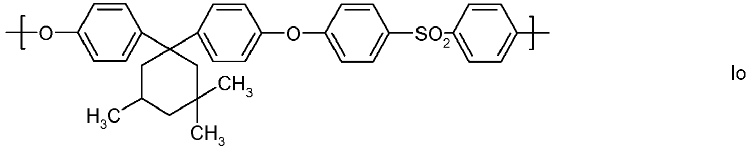

Zusätzlich zu den bevorzugt vorliegenden Bausteinen Ia bis Io sind auch solche Bausteine bevorzugt, in denen eine oder mehrere 1,4-Dihydroxyphenyl-Einheiten durch Resorcin- oder Dihydroxynaphthalin-Einheiten ersetzt sind.

Als Bausteine der allgemeinen Formel I besonders bevorzugt sind die Bausteine Ia, Ig und Ik. Es ist außerdem besonders bevorzugt, wenn die Polyarylenether der Polyarylenether (P) im Wesentlichen aus einer Sorte Bausteine der allgemeinen Formel I, insbesondere aus einem Baustein ausgewählt aus la, Ig und Ik aufgebaut sind.

In einer besonders bevorzugten Ausführungsform ist Ar = 1,4-Phenylen, t = 1, q = 0, T = SO₂ und Y = SO₂. Derartige Polyarylenether werden als Polyethersulfon (PESU) bezeichnet.

Als thermoplastische Polymere besonders bevorzugt sind Polyethersulfone (PESU), Polysulfone (PSU) und Polyphenylensulfone (PPSU), wobei Polyethersulfon (PESU) besonders bevorzugt ist.

Polyethersulfone (PESU) weisen wiederholende Struktureinheiten der Formel (Ik) auf, bevorzugt bestehen Polyethersulfone aus wiederholenden Struktureinheiten der Formel (Ik).

Polysulfone (PSU) weisen sich wiederholende Struktureinheiten der Formel (la) auf, bevorzugt bestehen Polysulfone aus sich wiederholenden Struktureinheiten der Formel (Ia).

Polyphenylensulfone (PPSU) weisen sich wiederholende Struktureinheiten der Formel (Ig) auf, bevorzugt bestehen Polyphenylensulfone aus sich wiederholenden Struktureinheiten der Formel (Ig).

Besonders bevorzugte thermoplastische Polymere, die eine Porosität im Bereich von 10 bis 90 % aufweisen, sind ausgewählt aus der Gruppe bestehend aus Polyethersulfonen (PESU), Polysulfonen (PSU), Polyphenylensulfonen (PPSU) und Copolymeren aus (PESU) und/oder (PSU) und/oder (PPSU).

Der Polyarylenether (P) weist vorzugsweise mindestens 60 %, besonders bevorzugt mindestens 80 %, insbesondere mindestens 90 % Phenol-Endgruppen bezogen auf die Gesamtzahl der Endgruppen auf.

Erfindungsgemäß werden unter "Phenol-Endgruppen" sowohl phenolische Endgruppen (OH-Endgruppen) als auch Phenolat-Endgruppen (O⁻-Endgruppen) verstanden. Unter "Phenol-Endgruppe" ist erfindungsgemäß somit die Summe der im Polyarylenether (P) enthaltenen phenolischen Endgruppen und der im Polyarylenether (P) enthaltenen Phenolat-Endgruppen zu verstehen

Die vorstehend als thermplastische Polymere mit einer Porosität im Bereich von 10 bis 90 % bevorzugten Polyarylenether (P) können ausgehend von Polyarylenethern (P), die keine Poren aufweisen, hergestellt werden. Unter "keine Poren aufweisen" wird erfindungsgemäß eine Porosität kleiner 10 %, bevorzugt kleiner 5 %, besonders bevorzugt kleiner 2 % und insbesondere kleiner 1 % und am meisten bevorzugt kleiner 0,1 % verstanden.

Verfahren zur Herstellung von Polyarylenether (P), die keine Poren aufweisen, sind beispielsweise in der WO 2010/057822 beschrieben.

Vorzugsweise weisen die Polyarylenether (P), die keine Poren aufweisen, mittlere Molekulargewichte Mₙ (Zahlenmittel) im Bereich von 2.000 bis 60.000 g/mol, insbesondere 5.000 bis 40.000 g/mol, bestimmt mittels Gelpermeationschromatographie im Lösungsmittel Dimethylacetamid gegen engverteiltes Polymethylmethacrylat als Standard auf.

Vorzugsweise weisen die Polyarylenether (P), die keine Poren aufweisen, relative Viskositäten von 0,20 bis 0,95 dl/g, insbesondere von 0,30 bis 0,80 auf. Die relativen Viskositäten werden je nach Löslichkeit der Polyarylenethersulfone entweder in 1-gewichtsprozentiger N-Methylpyrrolidon-Lösung, in Mischungen aus Phenol und Dichlorbenzol oder in 96-prozentiger Schwefelsäure bei jeweils 20 °C bzw. 25 °C gemessen.

Geeignete Polyphenylenether sind beschrieben in D. Aycock, Encyclopedia of Polymer Science and Engineering, 2nd. Edition, 1988 John Wiley & Sons, Vol. 13, p.1.

Geeignete Polyetherimide sind bekannt aus G. Yeager, Encyclopedia of Polymer Science and Technology, 3rd. Edition 2004 John Wiley & Sons, Vol 11, p.88.

Die Herstellung des thermoplastischen Polymers, das eine Porosität im Bereich von 10 bis 90 % aufweist, kann ausgehend von einem thermoplastischen Polymer ohne Poren durch dem Fachmann an sich bekannte Verfahren erfolgen. Hierbei können beispielsweise Verfahren zur Membranherstellung durch Phaseninversion eingesetzt werden, wie sie beispielsweise in "The Formation Mechanism of Asymmetric Membranes", H. Strathmann, K. Koch, P. Aimar, R. W. Baker; Desalination 16 (1975), 179-203, beschrieben sind.

Ein bevorzugtes Verfahren zur Herstellung von thermoplastischen Polymeren, die eine Porosität im Bereich von 10 bis 90 % aufweisen, wird nachfolgend exemplarisch anhand der erfindungsgemäß bevorzugten Polyarylenether (P) beschrieben.

Ein bevorzugtes Verfahren zur Herstellung eines Polyarylenethers (P), der eine Porosität im Bereich von 10 bis 90 % aufweist, umfasst die folgenden Schritte:
(i) Bereitstellung einer Lösung, die mindestens einen Polyarylenether (P), optional mindestens ein hydrophiles Polymer und mindestens ein aprotisches Lösungsmittel enthält und
(ii) Inkontaktbringen der in Verfahrensschritt (i) bereitgestellten Lösung mit einem Koagulationsmittel unter Erhalt des Polyarylenethers (P), der eine Porosität im Bereich von 10 bis 90 % aufweist.

Es versteht sich von selbst, dass das in Verfahrensschritt (i) optional eingesetzte hydrophile Polymer von den thermoplastischen Polymeren, insbesondere von den erfindungsgemäß bevorzugten Polyarylenethern (P), verschieden ist. Da in Verfahrensschritt (i) die Polyarylenether (P) gelöst in einem aprotischen Lösungsmittel bereitgestellt werden, weisen die Polyarylenether (P) in Verfahrensschritt (i) keine Poren auf.

Als aprotische Lösungsmittel können prinzipiell alle aprotischen Lösungsmittel eingesetzt werden, in denen das thermoplastische Polymer, bevorzugt der Polyarylenether (P), löslich ist.

Bevorzugte aprotische Lösungsmittel zur Bereitstellung der Lösung in Schritt (i) sind ausgewählt aus der Gruppe bestehend aus N-Methylpyrrolidon (N-Methyl-2-pyrrolidon; NMP), N-Ethyl-2-pyrrolidon (NEP), Dimethylacetamid, Dimethylsulfoxid, Dimethylformamid und Sulfolan (Tetrahydrothiophen-1,1-dioxid). Besonders bevorzugt sind N-Methylpyrrolidon, NEP, Dimethylacetamid, Dimethylsulfoxid und Dimethylformamid. Insbesondere bevorzugt ist N-Methylpyrrolidon.

Die Bereitstellung der Lösung in Schritt (i) kann in üblichen Behältnissen erfolgen, insbesondere in solchen, welche eine Rührvorrichtung und bevorzugt eine Vorrichtung zur Temperaturkontrolle umfassen. Das Herstellen der Lösung gemäß Schritt (i) des erfindungsgemäßen Verfahrens erfolgt bevorzugt unter Rühren. Das Auflösen des Polyarylenethers (P) und des hydrophilen Polymers kann nacheinander oder gleichzeitig erfolgen.

Vorzugsweise erfolgt die Durchführung des Schrittes (i) bei erhöhter Temperatur, insbesondere von 20°C bis 120°C, vorzugsweise von 40°C bis 100°C. Der Fachmann wählt die Temperatur insbesondere in Abhängigkeit vom aprotischen polaren Lösungsmittel.

Vorzugsweise enthält die in Schritt (i) bereitgestellte Lösung von 5 bis 45 Gew.-%, insbesondere von 9 bis 35 Gew.-%, des Polyarylenethers (P), bezogen auf das Gesamtgewicht der Lösung.

Die Summe des erfindungsgemäßen Polyarylenethers (P) und des optional eingesetzten hydrophilen Polymers in der in Schritt (i) bereitgestellten Lösung beträgt im Allgemeinen 5 bis 50 Gew.-%, insbesondere von 9 bis 40 Gew.-%, bezogen auf das Gesamtgewicht der Lösung.

Das Gewichtsprozentverhältnis von erfindungsgemäßem Polyarylenether (P) zu hydrophilem Polymer in der Lösung in Schritt (i) liegt im Allgemeinen im Bereich von 100 zu 0 bis 50 zu 50.

Als hydrophile Polymere sind Polymere geeignet, die in dem Koagulationsmittel, das in Verfahrensschritt (ii) eingesetzt wird, löslich sind. Als hydrophile Polymere, die in der Lösung gemäß Verfahrensschritt (i) enthalten sind, sind Polyvinylpyrrolidone und Polyalkylenglykole geeignet. Als Polyalkylenglykole sind beispielsweise Polyethylenglykole und Polypropylenglykole geeignet, wobei unter den Polyalkylenglykolen Polyethylenglykol bevorzugt ist.

Als hydrophiles Polymer ist in Verfahrensschritt (i) Polyvinylpyrrolidon mit einem gewichtsmittleren Molekulargewicht (M_{w}) im Bereich von 10.000 bis 2.000.000 g/mol, bevorzugt im Bereich von 30.000 bis 1.600.000 g/mol, besonders bevorzugt. Die Bestimmung des Molekulargewichts Mw erfolgt dabei durch GPC-Messung mit Wasser/Acetonitril 80/20 als Laufmittel und PVP-Standards. Vorzugsweise wird die in Verfahrensschritt (i) bereitgestellte Lösung vor der Durchführung von Verfahrensschritt (ii) entgast.

In Verfahrensschritt (ii) wird die in Verfahrensschritt (i) bereitgestellte Lösung mit einem Koagulationsmittel in Kontakt gebracht, wodurch der Polyarylenether (P) erhalten wird, der eine Porosität im Bereich von 10 bis 90 % aufweist.

Das in Verfahrensschritt (ii) eingesetzte Koagulationsmittel enthält bevorzugt mindestens ein protisches Lösungsmittel, ausgewählt aus der Gruppe bestehend aus Wasser, Methanol, Ethanol, 1-Propanol, 2-Propanol und Glycerin.

Als protisches Lösungsmittel, das im Koagulationsmittel enthalten ist, ist Wasser besonders bevorzugt.

Das Koagulationsmittel enthält in einer weiteren bevorzugten Ausführungsform mindestens 80 Gew.-%, bevorzugt mindestens 90 Gew.-% und insbesondere bevorzugt mindestens 95 Gew.-% eines protischen Lösungsmittels, jeweils bezogen auf das Gesamtgewicht des Koagulationsmittels, wobei Wasser als protisches Lösungsmittel besonders bevorzugt ist.

In Verfahrensschritt (ii) wird ein Polyarylenether (P) erhalten, der eine Porosität im Bereich von 10 bis 90 % aufweist. Der gemäß Verfahrensschritt (ii) erhaltene Polyarylenether (P) mit einer Porosität im Bereich von 10 bis 90 % kann weiteren Aufarbeitungs- und Reinigungsschritten unterzogen werden. Bevorzugt wird der in Verfahrensschritt (ii) erhaltene Polyarylenether (P) einem Extraktionsschritt unterzogen, wobei als Extraktionsmittel bevorzugt das Koagulationsmittel eingesetzt wird. Nach dem Extraktionsschritt kann der Polyarylenether (P) mit einer Porosität im Bereich von 10 bis 90 % einem Trocknungsschritt bei Temperaturen im Bereich von 50 bis 120 °C unterzogen werden, wobei die Trocknung bevorzugt unter vermindertem Druck durchgeführt wird.

Die Form des in Verfahrensschritt (ii) erhaltenen Polyarylenethers (P) mit einer Porosität im Bereich von 10 bis 90 % kann variieren. Der in Verfahrensschritt (ii) erhaltene Polyarylenether (P) mit einer Porosität im Bereich von 10 bis 90 % kann beispielsweise in Form einer Folie oder in Form einer Faser erhalten werden. Zur Herstellung von Folien wird gemäß Verfahrensschritt (i) die Lösung in Form eines Films bereitgestellt, wobei der Film nachfolgend mit dem Koagulationsmittel in Kontakt gebracht wird. Für den Fall, dass der Polyarylenether (P) in Verfahrensschritt (ii) in Form einer Faser erhalten werden soll, wird die in Verfahrensschritt (i) bereitgestellte Lösung beispielsweise einem Nassverspinnungsschritt unterzogen, bevor sie mit in Verfahrensschritt (ii) mit dem Koagulationsmittel in Kontakt gebracht wird.

Die so erhaltenen Fasern des Polyarylenethers (P) mit einer Porosität im Bereich von 10 bis 90 % können zu Geweben weiterverarbeitet werden. Das in Verfahrensschritt b) eingesetzte thermoplastische Polymer, insbesondere der Polyarylenether (P) mit einer Porosität im Bereich von 10 bis 90 %, wird bevorzugt in Form einer Folie, einer Faser oder eines Gewebes eingesetzt.

Als Formwerkzeuge können im erfindungsgemäßen Verfahren sämtliche Formwerkzeuge eingesetzt werden, die zum Urformen geeignet sind.

Die Bereitstellung des duroplastisch vernetzbaren Harzsystems, bevorzugt des duroplastisch vernetzbaren Epoxidharzsystems, kann nach dem Fachmann bekannten Methoden erfolgen. Hierzu werden bevorzugt die mindestens eine Epoxidverbindung (E), der mindestens eine Härter (H) sowie gegebenenfalls der Härtungsbeschleuniger (HB) und gegebenenfalls der Reaktivverdünner (RV) gemischt, wodurch das duroplastisch härtbare Epoxidharzsystem erhalten wird. Bevorzugt werden die Komponenten des Epoxidharzsystems jedoch außerhalb des Formwerkzeugs gemischt und das so erhaltene duroplastisch vernetzbare Epoxidharzsystem wird nachfolgend in das Formwerkzeug eingebracht.

Die Bereitstellung des duroplastisch vernetzbaren Epoxidharzsystems in Verfahrensschritt a) erfolgt im Allgemeinen bei Temperaturen im Bereich von 0 bis 100 °C, bevorzugt im Bereich von 10 bis 90°C, besonders bevorzugt im Bereich von 15 bis 80°C und insbesondere bevorzugt im Bereich von 20 bis 75 °C.

Das Vernetzen in Verfahrensschritt b) erfolgt im Allgemeinen bei Temperaturen im Bereich von 20 bis 300°C, bevorzugt im Bereich von 25 bis 275°C, besonders bevorzugt im Bereich von 25 bis 250°C und insbesondere bevorzugt im Bereich von 25 bis 245°C.

In einer bevorzugten Ausführungsform wird das thermoplastische Polymer, das eine Porosität im Bereich von 10 bis 90 % aufweist, vor der Bereitstellung des duroplastisch vernetzbaren Harzsystems in dem Formwerkzeug bereitgestellt.

In dieser Ausführungsform wird gemäß Verfahrensschritt a1) das thermoplastische Polymer, das eine Porosität von 10 bis 90 % aufweist, in das Formwerkzeug eingebracht, und nachfolgend gemäß Verfahrensschritt a2) das duroplastisch vernetzbare Harzsystem, bevorzugt das duroplastisch vernetzbare Epoxidharzsystem, in das Formwerkzeug eingespritzt bzw. eingesaugt und nachfolgend der vorstehend beschriebene Verfahrensschritt b) durchgeführt.

Das duroplastische Formteil enthält in einer weiteren Ausführungsform der vorliegenden Erfindung mindestens einen Verstärkungsstoff. Bevorzugt sind faserförmige Verstärkungsstoffe wie beispielsweise Kohlefasern, Kaliumtitanatwhisker, Aramidfasern und bevorzugt Glasfasern.

Bevorzugt als Verstärkungsstoff sind Endlosfasern, die ausgewählt sind aus Gestricken, Gewirken und Geweben, wobei Glasfasern als Fasermaterial bevorzugt sind. Darüber hinaus ist es möglich, unidirektionale Endlosfasern einzusetzen. Solche einfädigen Endlosfasern werden auch als "Monofil" bezeichnet. Für den Fall, dass unidirektionale Endlosfasern eingesetzt werden, werden eine Vielzahl parallel zueinander eingesetzter Endlosglasfasern eingesetzt. Bevorzugt werden in diesem Fall unidirektionale Lagen parallel zueinander ausgerichteter Endlosfasern eingesetzt. Darüber hinaus ist es möglich, bidirektionale oder mehrdirektionale Lagen von Endlosfasern einzusetzen. Zur Herstellung duroplastischer Formteile, die mindestens einen Verstärkungsstoff enthalten, wird der Verstärkungsstoff bevorzugt ebenfalls in das Formwerkzeug eingebracht, bevor das duroplastisch vernetzbare Harzsystem, bevorzugt das duroplastisch vernetzbare Epoxidharzsystem, in das Formwerkzeug eingespritzt wird (im Formwerkzeug bereitgestellt wird).

Bevorzugt wird zunächst ein Verstärkungsstoff bereitgestellt, auf den das thermoplastische Polymer, das eine Porosität im Bereich von 10 bis 90 % aufweist, aufgebracht wird. Das thermoplastische Polymer, das eine Porosität im Bereich von 10 bis 90 % aufweist, kann dabei in Form eines Films, in Form von Fasern oder in Form von Geweben auf den Verstärkungsstoff aufgebracht werden. Nachfolgend wird der Verstärkungsstoff, auf den das thermoplastische Polymer aufgebracht wurde, das eine Porosität im Bereich von 10 bis 90 % aufweist, im Formwerkzeug mit dem duroplastisch vernetzbaren Harzsystem, bevorzugt mit dem duroplastisch vernetzbaren Epoxidharzsystem, in Kontakt gebracht.

Während der Verfahrensschritts b) vernetzt das duroplastisch vernetzbare Harzsystem in dem Formwerkzeug, wodurch das duroplastische Formteil erhalten wird. Dieser Vorgang wird, wie vorstehend beschrieben, auch als "Aushärten" bezeichnet.

Wie vorstehend bereits ausgeführt, wird das duroplastisch vernetzbare Harzsystem in Verfahrensschritt a) in nichtausgehärteter oder nur teilweise ausgehärteter Form bereitgestellt. In Verfahrensschritt b) wird das duroplastische Formteil in ausgehärteter, bevorzugt in vollständig ausgehärteter Form erhalten. Erfindungsgemäß gilt Verfahrensschritt a) als abgeschlossen, wenn das Einspritzen des duroplastisch vernetzbaren Harzsystems, bevorzugt des duroplastisch vernetzbaren Epoxidharzsystems, in das Formwerkzeug beendet ist. Erfindungsgemäß beginnt Verfahrensschritt b) somit unmittelbar nachdem Verfahrensschritt a), das heißt das Einspritzen des duroplastisch vernetzbaren Harzsystems in das Formwerkzeug, abgeschlossen ist.

Während des Vernetzens in Verfahrensschritt b) löst sich das thermoplastische Polymer mit einer Porosität im Bereich von 10 bis 90 %, bevorzugt der Polyarylenether (P), in dem duroplastisch vernetzbaren Harzsystem auf.

Nach Verfahrensschritt b) wird das duroplastische Formteil erhalten. Dieses duroplastische Formteil enthält das thermoplastische Polymer, bevorzugt den Polyarylenether (P). Es versteht sich von selbst, dass bei diesem Auflösungsvorgang die ursprünglich im thermoplastischen Polymer enthaltenen Poren verloren gehen. Die Angaben zur Porosität des thermoplastischen Polymers, bevorzugt des Polyarylenethers (P), beziehen sich erfindungsgemäß somit auf den Zeitpunkt unmittelbar nach Beendigung des Verfahrensschritts a), das heißt den Zeitpunkt, nachdem das Einspritzen des duroplastisch vernetzbaren Harzsystems in das Formwerkzeug beendet ist.

Das in Verfahrensschritt a) bereitgestellte duroplastisch vernetzbare Harzsystem, bevorzugt das duroplastisch vernetzbare Epoxidharzsystem, weist im Allgemeinen eine Viskosität im Bereich von 5 bis 1000 mPa·s, bevorzugt im Bereich von 10 bis 800 mPa·s, besonders bevorzugt im Bereich von 20 bis 750 mPa·s und insbesondere bevorzugt im Bereich von 25 bis 600 mPa·s auf, gemessen bei 60 °C mit einer Platte-Platte-Messanordnung bei einer Scherrate von 1 Hz.

Das durch das erfindungsgemäße Verfahren erhältliche duroplastische Formteil zeichnet sich durch eine günstige Eigenfarbe sowie eine gute Kerbschlagzähigkeit aus.

Die vorliegende Erfindung wird durch die nachfolgenden Beispiele näher erläutert, ohne sich jedoch hierauf zu beschränken.

### Beispiele

Als thermoplastisches Polymer wurde ein Polyethersulfon mit einer Viskositätszahl von 56 ml/g eingesetzt. Die Viskositätszahl wurde in 1-prozentiger Lösung in Phenol/o-Dichlorbenzol 1/1 bestimmt. Das Polyethersulfon wies mindestens 60 % OH-Endgruppen auf, bezogen auf die Gesamtzahl der Endgruppen. Das Polyethersulfon ist unter dem Handelsnamen "Ultrason® E 2020 P SR" der BASF SE erhältlich.

Als Epoxidverbindung (E) wurde ein Bisphenol-A-Diglycidylether mit einem mittleren Molekulargewicht von 395 g/mol eingesetzt

Als Härter (H) wurde Hexahydrophthalsäureanhydrid eingesetzt.

Als Härtungsbeschleuniger (HB) wurde 2-Ethyl-4-methyl-imidazol eingesetzt.

### Herstellung eines thermoplastischen Polymers ohne Poren (nicht erfindungsgemäß); nachfolgend "F I"

In einem DSM-Miniextruder (Typ 15cc), der mit einer Foliendüse ausgerüstet war, wurden 15 g des vorstehend beschriebenen Polyethersulfons bei einer Temperatur von 340 °C aufgeschmolzen. Hierzu wurde das Polyethersulfon fünf Minuten über einen internen Rücklaufkanal zirkuliert. Anschließend wurde das Polyethersulfon durch die Foliendüse mit einer Spaltweite von 150 µm ausgefahren. Die dabei erhaltene Folie (F I) war transparent, jedoch stark verfärbt, sehr spröde und brüchig. Beim Auflösen von 1 g der Folie in 20 ml N-Methylpyrrolidon (NMP) bei 25 °C für einen Zeitraum von acht Stunden blieb ein unlöslicher Anteil zurück. Die Dichte der Folie wurde gravimetrisch bestimmt und betrug 1,37 g/cm³.

### Herstellung eines thermoplastischen Polymers mit einer Porosität im Bereich von 10 bis 90 % (erfindungsgemäß); nachfolgend "F II"

Eine Lösung von 30 g des vorstehend beschriebenen Polyethersulfons, 5 g Polyvinylpyrrolidon K30 (hydrophiles Polymer) in 65 g NMP wurde bei Raumtemperatur (25 °C) mit Hilfe einer Rakel mit einer Breite von 10 cm in einen 300 µm dicken Lösungsfilm auf einer Glasplatte ausgeformt. Anschließend wurde die Glasplatte in ein Wasserbad (Koagulationsmittel) überführt, wobei ein weißer Film erhalten wurde, der sich nach drei Minuten von der Glasplatte ablöste. Der so erhaltene Film (F II) wurde nachfolgend vier Stunden mit 60 °C warmem Wasser gewaschen und danach für zwölf Stunden im Vakuum bei 100 °C getrocknet. Nach dem Trocknen wurde das thermoplastische Polymer mit einer Porosität von 10 bis 90 % erhalten. Das Vorliegen von Poren wird durch die fehlende Transparenz sowie die deutlich verringerte Dichte belegt. Die Dichte des Films (F II) wurde gravimetrisch bestimmt und betrug 0,56 g/cm³. Die Porosität des Films beträgt 58,8%.

### Herstellung eines thermoplastischen Polymers mit einer Porosität im Bereich von 10 bis 90 % (erfindungsgemäß); nachfolgend "F III"

Eine Lösung von 30 g des vorstehend beschriebenen Polyethersulfons, 5 g Polyethylenoxid (Mₙ = 6000 g/mol; hydrophiles Polymer) in 65 g NMP wurde bei Raumtemperatur (25 °C) mit Hilfe einer Rakel mit einer Breite von 10 cm in einen 300 µm dicken Lösungsfilm auf einer Glasplatte ausgeformt. Anschließend wurde die Glasplatte in ein Wasserbad (Koagulationsmittel) überführt, wobei ein weißer Film erhalten wurde, der sich nach 1,5 Minuten von der Glasplatte ablöste. Der so erhaltene Film (F III) wurde nachfolgend vier Stunden mit 60 °C warmem Wasser gewaschen und danach für zwölf Stunden im Vakuum bei 100 °C getrocknet. Nach dem Trocknen wurde das thermoplastische Polymer mit einer Porosität von 10 bis 90 % erhalten. Das Vorliegen von Poren wird durch die fehlende Transparenz sowie die deutlich verringerte Dichte belegt. Die Dichte des Films (F III) wurde gravimetrisch bestimmt und betrug 0,75 g/cm³. Die Porosität des Films beträgt 45,3 %.

### Herstellung eines thermoplastischen Polymers mit einer Porosität im Bereich von 10 bis 90 % (erfindungsgemäß); nachfolgend "F IV"

Eine Lösung von 40 g des vorstehend beschriebenen Polyethersulfons in 60 g NMP wurde bei Raumtemperatur (25 °C) mit Hilfe einer Rakel mit einer Breite von 10 cm in einen 300 µm dicken Lösungsfilm auf einer Glasplatte ausgeformt. Anschließend wurde die Glasplatte in ein Wasserbad (Koagulationsmittel) überführt, wobei ein weißer Film erhalten wurde, der sich nach vier Minuten von der Glasplatte ablöste. Der so erhaltene Film (F IV) wurde nachfolgend zehn Stunden mit 85 °C warmem Wasser extrahiert und danach für zwölf Stunden im Vakuum bei 100 °C getrocknet. Nach dem Trocknen wurde das thermoplastische Polymer mit einer Porosität von 10 bis 90 % erhalten. Das Vorliegen von Poren wird durch die fehlende Transparenz sowie die deutlich verringerte Dichte belegt. Die Dichte des Films (F IV) wurde gravimetrisch bestimmt und betrug 0,87 g/cm³. Die Porosität des Films beträgt 36,5 %.

### Herstellung eines thermoplastischen Polymers mit einer Porosität im Bereich von 10 bis 90 % (erfindungsgemäß); nachfolgend "F V"

Eine Lösung von 15 g des vorstehend beschriebenen Polyethersulfons, 5 g Polyvinylpyrrolidon K30 (hydrophiles Polymer) in 80 g NMP wurde bei Raumtemperatur (25 °C) mit Hilfe einer Rakel mit einer Breite von 10 cm in einen 150 µm dicken Lösungsfilm auf einer Glasplatte ausgeformt. Anschließend wurde die Glasplatte in ein Wasserbad (Koagulationsmittel) überführt, wobei ein weißer Film erhalten wurde, der sich nach zwei Minuten von der Glasplatte ablöste. Der so erhaltene Film (F V) wurde nachfolgend zehn Stunden mit 85 °C warmem Wasser extrahiert und danach für zwölf Stunden im Vakuum bei 100 °C getrocknet. Nach dem Trocknen wurde das thermoplastische Polymer mit einer Porosität von 10 bis 90 % erhalten. Das Vorliegen von Poren wird durch die fehlende Transparenz sowie die deutlich verringerte Dichte belegt. Die Dichte des Films (F V) wurde gravimetrisch bestimmt und betrug 0,28 g/cm³. Die Porosität des Films beträgt 79,6 %.

### Herstellung eines thermoplastischen Polymers mit einer Porosität größer als 90 % (nicht erfindungsgemäß); nachfolgend "F VI"

Eine Lösung von 7,5 g des vorstehend beschriebenen Polyethersulfons, 5 g Polyvinylpyrrolidon K30 (hydrophiles Polymer) in 87,5 g NMP wurde bei Raumtemperatur (25 °C) mit Hilfe einer Rakel mit einer Breite von 10 cm in einen 50 µm dicken Lösungsfilm auf einer Glasplatte ausgeformt. Anschließend wurde die Glasplatte in ein Wasserbad (Koagulationsmittel) überführt, wobei ein weißer Film erhalten wurde, der sich nach 1,5 Minuten von der Glasplatte ablöste. Der so erhaltene Film (F VI) wurde nachfolgend zehn Stunden mit 85 °C warmem Wasser extrahiert und danach für zwölf Stunden im Vakuum bei 100 °C getrocknet. Nach dem Trocknen wurde das thermoplastische Polymer als brüchiger weißer Film (F VI) mit einer Porosität von größer 90 % erhalten. Das Vorliegen von Poren wird durch die fehlende Transparenz sowie die deutlich verringerte Dichte belegt. Die Dichte des Films (F VI) wurde gravimetrisch bestimmt und betrug 0,11 g/cm³. Die Porosität des Films beträgt 92,0 %.

Eine Verarbeitung des Films (F VI) war aufgrund seiner Sprödigkeit nicht möglich.

### Herstellung eines thermoplastischen Polymers mit einer Porosität kleiner als 10 % (nicht erfindungsgemäß); nachfolgend "F VII"

Eine Lösung von 55 g des vorstehend beschriebenen Polyethersulfons in 45 g NMP wurde bei Raumtemperatur (25 °C) mit Hilfe einer Rakel mit einer Breite von 10 cm in einen 300 µm dicken Lösungsfilm auf einer Glasplatte ausgeformt. Anschließend wurde die Glasplatte in ein Wasserbad (Koagulationsmittel) überführt, wobei ein weißer Film erhalten wurde, der sich nach 60 Minuten von der Glasplatte ablöste. Der so erhaltene Film (F VII) wurde nachfolgend zehn Stunden mit 85 °C warmem Wasser extrahiert. Anschließend wurde bei 60 °C für zwei Stunden, bei 100 °C für weitere 2 Stunden und bei 140 °C für sechs Stunden jeweils im Vakuum getrocknet. Nach dem Trocknen wurde das thermoplastische Polymer mit einer Porosität von kleiner 10 % erhalten. Das Vorliegen von Poren wird durch die zumindest teilweise fehlende Transparenz sowie die leicht verringerte Dichte belegt. Die Dichte des Films (F VII) wurde gravimetrisch bestimmt und betrug 1,28 g/cm³. Die Porosität des Films beträgt 6,6 %.

Die Anwesenheiten von transparenten Bereichen im thermoplastischen Polymer ist auf einen Restanteil von NMP von ungefähr 2 Gew.-%, bezogen auf das Gesamtgewicht des thermoplastischen Polymers, zurückzuführen. Der Film konnte wegen des hohen Anteils an NMP nicht verwendet werden.

### Herstellung eines thermoplastischen Polymers mit einer Porosität im Bereich von 10 bis 90 % (erfindungsgemäß); nachfolgend "Faser I"

Eine Lösung von 300 g des vorstehend beschriebenen Polyethersulfons, 50 g Polyvinylpyrrolidon K30 (hydrophiles Polymer) in 650 g NMP wurde bei Raumtemperatur (25 °C) durch einen Ringspalt in ein Fällbad aus Wasser extrudiert. Die so erhaltene Hohlfaser (Faser I) wurde nachfolgend acht Stunden mit 60 °C warmem Wasser gewaschen und danach für zwölf Stunden im Vakuum bei 100 °C getrocknet. Nach dem Trocknen wurde das thermoplastische Polymer als weiße Hohlfaser (Faser I) mit einem Außendurchmesser von 450 ± 25 µm und einem Innendurchmesser von 300 ± 15 µm sowie mit einer Porosität von 10 bis 90 % erhalten. Das Vorliegen von Poren wird durch die fehlende Transparenz sowie die deutlich verringerte Dichte belegt. Die Dichte der Hohlfaser (Faser I) wurde gravimetrisch bestimmt und betrug 0,66 g/cm³. Die Porosität des Films beträgt 51,8 %.

### Herstellung der duroplastischen Formteile

Zur Herstellung der duroplastischen Formteile wurden jeweils 120 g der Epoxidverbindung (E) und 100 g des Härters (H) bei 80 °C gemischt, bis eine homogene Verteilung vorlag. Danach wurden bei 80 °C jeweils die in der nachfolgenden Tabelle 1 angegebenen Mengen der Folie (F I), des Films (F II bis F V) bzw. der Hohlfaser (Faser I) zugemischt. Anschließend wurde so lange gerührt, bis sich die Folie (F I), der Film (F II bis F V) bzw. die Hohlfaser (Faser I) aufgelöst hatten. Die zum Auflösen benötigte Zeit wurde bestimmt. Anschließend wurde auf 40 °C abgekühlt und nachfolgend wurden 2,4 g des Härtungsbeschleunigers (HB) bei 40 °C unter starkem Rühren zugegeben. Nachfolgend wurde die so erhaltene Mischung für zehn Minuten im Vakuum entgast, um Blasen zu entfernen. Anschließend wurde die Mischung für 24 Stunden bei einer Temperatur von 80 °C gehärtet und nachfolgend für einen Zeitraum von 30 Minuten bei 200 °C nachgehärtet.

Aus den so erhaltenen duroplastischen Formteilen wurden Proben der Abmessung 80*10*2 mm ausgearbeitet. Nach Einbringen einer Kerbe (Tiefe 2 mm, Radius 2,5 mm) wurde die Kerbschlagzähigkeit nach ISO 180 geprüft. Die Farbe der Probe wurde visuell begutachtet. (+ sehr gut; +/o gut; o befriedigend; o/- ausreichend; - mangelhaft; - - ungenügend).

Die Ergebnisse sind in der nachfolgenden Tabelle aufgeführt.

**Tabelle 1**

| **Formmasse** | **V1** | **V2** | **V3** | **4** | **5** | **6** | **7** | **8** | **9** | **10** | **11** |
|---|---|---|---|---|---|---|---|---|---|---|---|
| **A*** | 90 | 85 | 80 | 90 | 85 | 20 | 85 | 85 | 85 | 85 | 80 |
| **FI** | 10 | 15 | 20 | - | - | - | - | - | - | - | - |
| **F II** | - | - | - | 10 | 15 | 20 | - | - | - | - | - |
| **F III** | - | - | - | - | - | - | 15 | - | - | - | - |
| **F IV** | - | - | - | - | - | - | - | 15 | - | - | - |
| **F V** | - | - | - | - | - | - | - | - | 15 | - | - |
| **Faser I** | - | - | - | - | - | - | - | - | - | 15 | 20 |
| **Mischzeit [h]** | 5,2 | 6,5 | 7 | 2,5 | 3,2 | 4 | 4 | 4,25 | 3 | 3,5 | 4,25 |
| **Transparenz** | nein | nein | nein | nein | nein | nein | nein | nein | nein | nein | nein |
| **Eigenfarbe** | o/- | - | - - | + | +/o | o | +/o | +/o | +/o | +/o | +/o |
| **aₖ [kJ/m²]** | 0,23 | 0,26 | 0,27 | 0,87 | 0,92 | 1,06 | 0,47 | 0,44 | 0,47 | 0,46 | 0,50 |

A* gibt den Anteil des Epoxidharzsystems bestehend aus Epoxidverbindung (E), Härter (H) und Härtungsbeschleuniger (HB) in Gewichtsprozent an. Die Anteile der Folie (F I), des Films (F II bis F V) bzw. der Hohlfaser (Faser I) sind ebenfalls in Gewichtsprozent angegeben. V1, V2 und V3 sind Vergleichsbeispiele, bei denen die nichtporöse Folie (F I) eingesetzt wird. Die Beispiele 4, 5 und 6 sind erfindungsgemäße Beispiele, bei denen der poröse Film (F II) eingesetzt wird. Die Beispiele 7 bis 9 sind weitere Ausführungsbeispiele, wobei in Beispiel 7 der poröse Film (F III), in Beispiel 8 der poröse Film (F IV) und in Beispiel 9 der poröse Film (F V) eingesetzt wird. Die Beispiele 10 und 11 sind weitere Ausführungsbeispiele, in denen die Hohlfaser (Faser I) eingesetzt wird.

Die vorliegenden Beispiele zeigen, dass der Einsatz von thermoplastischen Polymeren mit einer Porosität im Bereich von 10 bis 90 % ein deutlich schnelleres Auflösen des thermoplastischen Polymers im Epoxidharzsystem ermöglicht. Darüber hinaus werden duroplastische Formteile mit deutlich verbesserter Eigenfarbe sowie deutlich verbesserter Kerbschlagzähigkeit erhalten für den Fall, dass das Vernetzen des duroplastisch vernetzbaren Harzsystems in Gegenwart eines thermoplastischen Polymers mit einer Porosität im Bereich von 10 bis 90 % durchgeführt wird.

## Patentansprüche

1. Verfahren zur Herstellung eines duroplastischen Formteils umfassend die Schritte
a) Bereitstellen eines duroplastisch vernetzbaren Harzsystems in einem Formwerkzeug,
b) Vernetzen des in Schritt a) bereitgestellten duroplastisch vernetzbaren Harzsystems in dem Formwerkzeug in Gegenwart eines thermoplastischen Polymers, das eine Porosität von 10 bis 90 % aufweist, unter Erhalt des duroplastischen Formteils,
c) Entnahme des duroplastischen Formteils aus dem Formwerkzeug, **dadurch gekennzeichnet, dass** das thermoplastische Polymer mindestens ein Polyarylenether (P) ist, der aufgebaut ist aus Bausteinen der allgemeinen Formel (I) 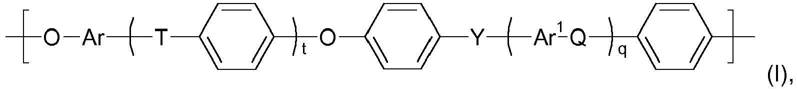 mit folgenden Bedeutungen:
t, q: unabhängig voneinander 0, 1, 2 oder 3,
Q, T, Y: unabhängig voneinander jeweils eine chemische Bindung oder Gruppe, ausgewählt aus -O-, -S-, -SO₂-, S=O, C=O, -N=N-, -CR^{a}R^{b}-, wobei R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei wenigstens eines aus Q, T und Y von -O-verschieden ist, und wenigstens eines aus Q, T und Y für -SO₂- steht und
Ar, Ar¹: unabhängig voneinander eine Arylengruppe mit von 6 bis 18 Kohlenstoffatomen.

2. Verfahren gemäß Anspruch 1, **dadurch gekennzeichnet, dass** das in Verfahrensschritt a) bereitgestellte duroplastisch vernetzbare Harzsystem ausgewählt ist aus der Gruppe bestehend aus duroplastisch vernetzbaren Epoxid-Harzsystemen, duroplastisch vernetzbaren Harnstoff-Formaldehyd-Harzsystemen, duroplastisch vernetzbaren Melamin-Formaldehyd-Harzsystemen, duroplastisch vernetzbaren Melamin-Phenol-Formaldehydharzsystemen, duroplastisch vernetzbaren Phenol-Formaldehyd-Harzsystemen und duroplastisch vernetzbaren Bismaleinimid-Harzsystemen.

3. Verfahren gemäß Anspruch 1 oder 2, **dadurch gekennzeichnet, dass** der Polyarylenether (P) Endgruppen aufweist, wobei mindestens 60 % der Endgruppen Phenol-Endgruppen sind, bezogen auf die Gesamtzahl der Endgruppen des Polyarylenethers (P).

4. Verfahren gemäß einem der Ansprüche 1 bis 3, **dadurch gekennzeichnet, dass** das thermoplastische Polymer ausgewählt ist aus der Gruppe bestehend aus Polyethersulfonen (PESU), Polysulfonen (PSU) und Polyphenylsulfonen (PPSU).

5. Verfahren gemäß einem der Ansprüche 1 bis 4, **dadurch gekennzeichnet, dass** das in Verfahrensschritt a) bereitgestellte duroplastisch vernetzbare Harzsystem ein Epoxidharzsystem ist, das die folgenden Komponenten enthält:
(A) mindestens eine Epoxiverbindung (E), die mindestens eine Epoxidgruppe pro Molekül aufweist, und
(B) mindestens einen Härter (H).

6. Verfahren gemäß Anspruch 5, **dadurch gekennzeichnet, dass** die Epoxiverbindung (E) mindestens zwei Epoxidgruppen pro Molekül aufweist.

7. Verfahren gemäß Anspruch 5 oder 6, **dadurch gekennzeichnet, dass** die Epoxiverbindung (E) ein auf Bisphenolen gemäß der allgemeinen Formel (II) basierender Bisglycidylether ist, 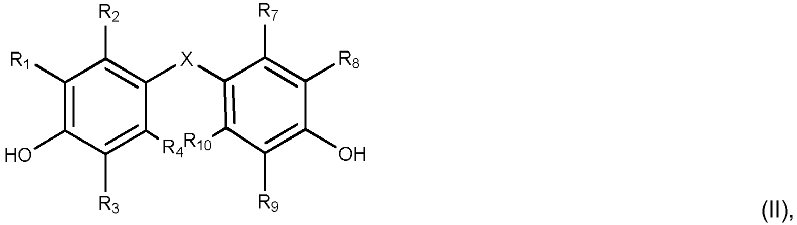 wobei:
R¹ bis R⁴ und R⁷ bis R¹⁰ sind unabhängig voneinander H, C₁-C₆-Alkyl, Aryl, Halogen oder C₂-C₁₀-Alkenyl, wobei R¹ bis R⁴ und R⁷ bis R¹⁰ auch Teil eines Ringsystems sein können;
X ist CR⁵R⁶ oder SO₂;
sofern X gleich CR⁵R⁶ ist, dann sind R⁵ und R⁶ unabhängig voneinander H, Halogen, C₁-C₆-Alkyl, C₂-C₁₀-Alkenyl oder Aryl oder R⁵ und R⁶ können auch Teil eines Ringsystems sein.

8. Verfahren gemäß einem der Ansprüche 5 bis 7, **dadurch gekennzeichnet, dass** die Epoxiverbindung (E) ein auf Bisphenolen basierender Bisglycidylether ist, bei dem die Bisphenole ausgewählt sind aus der Gruppe Bisphenol A (CAS: 80-05-7), Bisphenol AF (CAS: 1478-61-1), Bisphenol AP (CAS: 1571-75-1), Bisphenol B (CAS: 77-40-7), Bisphenol BP (CAS: 1844-01-5), Bisphenol C (CAS: 79-97-0), Bisphenol C (CAS: 14868-03-2), Bisphenol E (CAS: 2081-08-5), Bisphenol F (CAS: 620-92-8), Bisphenol FL (CAS: 3236-71-3), Bisphenol G (CAS: 127-54-8), Bisphenol M (CAS: 13595-25-0), Bisphenol P (CAS: 2167-51-3), Bisphenol PH (CAS: 24038-68-4), Bisphenol S (CAS: 80-09-1), Bisphenol TMC (CAS: 129188-99-4) und Bisphenol Z (CAS: 843-55-0).

9. Verfahren gemäß Anspruch 5, **dadurch gekennzeichnet, dass** die Epoxiverbindung (E) ausgewählt ist aus der Gruppe Tetraglycidylmethylendianiline (TGMDA), Epoxy-Novolaken und cycloaliphatischer Epoxidverbindungen.

10. Verfahren gemäß den Ansprüchen 5 bis 8, **dadurch gekennzeichnet, dass** der Härter (H) ausgewählt ist aus der Gruppe bestehend aus 1,3-Diaminbenzol, 2,6-bis-(Aminomethyl)piperidin, Diethylentriamin, Triethylentetramin, 4,4'-Diaminodiphenylsulfon. Phthalsäureanhydrid und Hexahydrophthalsäureanhydrid.

11. Verfahren gemäß einem der Ansprüche 1 bis 10, **dadurch gekennzeichnet, dass** in Verfahrensschritt a) in dem Formwerkzeug zusätzlich ein Verstärkungsstoff bereitgestellt wird, bevor das duroplastische Harzsystem bereitgestellt wird.

12. Verfahren gemäß Anspruch 11, **dadurch gekennzeichnet, dass** das thermoplastische Polymer auf den Verstärkungsstoff aufgebracht wird.

13. Verwendung eines thermoplastischen Polymers, das eine Porosität von 10 bis 90 % aufweist, zur Erhöhung der Zähigkeit eines Duroplasten, bevorzugt zur Erhöhung der Zähigkeit eines duroplsatischen Fomrteils, **dadurch gekennzeichnet, dass** das thermoplastische Polymer mindestens ein Polyarylenether (P) ist, der aufgebaut ist aus Bausteinen der allgemeinen Formel (I) 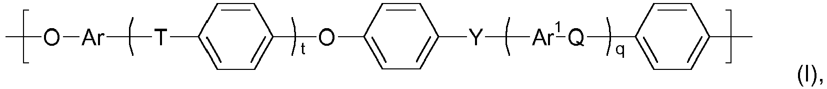 mit folgenden Bedeutungen:
t, q: unabhängig voneinander 0, 1, 2 oder 3,
Q, T, Y: unabhängig voneinander jeweils eine chemische Bindung oder Gruppe, ausgewählt aus -O-, -S-, -SO₂-, S=O, C=O, -N=N-,-CR^{a}R^{b-}, wobei R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei wenigstens eines aus Q, T und Y von -O- verschieden ist, und wenigstens eines aus Q, T und Y für -SO₂- steht und
Ar, Ar¹: unabhängig voneinander eine Arylengruppe mit von 6 bis 18 Kohlenstoffatomen.

## Claims

1. A process for producing a thermoset molding, comprising the steps of
a) providing a thermosettably crosslinkable resin system in a mold,
b) crosslinking the thermosettably crosslinkable resin system provided in step a) in the mold in the presence of a thermoplastic polymer having a porosity of 10% to 90% to obtain the thermoset molding,
c) removing the thermoset molding from the mold, wherein the thermoplastic polymer is at least one polyarylene ether (P) formed from units of the general formula (I) 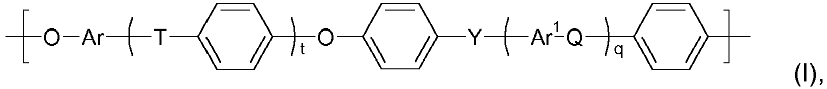 with the following definitions:
t, q: independently 0, 1, 2 or 3,
Q, T, Y: each independently a chemical bond or group selected from -O-, -S-, -SO₂-, S=O, C=O, -N=N-, -CR^{a}R^{b}- where R^{a} and R^{b} are each independently a hydrogen atom or a C₁-C₁₂-alkyl, C₁-C₁₂-alkoxy or C₆-C₁₈-aryl group, where at least one of Q, T and Y is different than -O-, and at least one of Q, T and Y is -SO₂- and
Ar, Ar¹: each independently an arylene group having from 6 to 18 carbon atoms.

2. The process according to claim 1, wherein the thermosettably crosslinkable resin system provided in process step a) is selected from the group consisting of thermosettably crosslinkable epoxy resin systems, thermosettably crosslinkable ureaformaldehyde resin systems, thermosettably crosslinkable melamine-formaldehyde resin systems, thermosettably crosslinkable melamine-phenol-formaldehyde resin systems, thermosettably crosslinkable phenol-formaldehyde resin systems and thermosettably crosslinkable bismaleimide resin systems.

3. The process according to claim 1 or 2, wherein the polyarylene ether (P) has end groups, where at least 60% of the end groups are phenol end groups, based on the total number of end groups in the polyarylene ether (P).

4. The process according to any of claims 1 to 3, wherein the thermoplastic polymer is selected from the group consisting of polyether sulfones (PESU), polysulfones (PSU) and polyphenyl sulfones (PPSU).

5. The process according to any of claims 1 to 4, wherein the thermosettably crosslinkable resin system provided in process step a) is an epoxy resin system comprising the following components:
(A) at least one epoxy compound (E) having at least one epoxy group per molecule, and
(B) at least one hardener (H).

6. The process according to claim 5, wherein the epoxy compound (E) has at least two epoxy groups per molecule.

7. The process according to claim 5 or 6, wherein the epoxy compound (E) is a bisglycidyl ether based on bisphenols of the general formula (II): 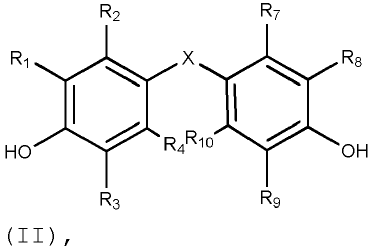 where:
R¹ to R⁴ and R⁷ to R¹⁰ are each independently H, C₁-C₆-alkyl, aryl, halogen or C₂-C₁₀-alkenyl, where R¹ to R⁴ and R⁷ to R¹⁰ may also be part of a ring system;
X is CR⁵R⁶ or SO₂;
if X is CR⁵R⁶, R⁵ and R⁶ are each independently H, halogen, C₁-C₆-alkyl, C₂-C₁₀-alkenyl or aryl or R⁵ and R⁶ may also be part of a ring system.

8. The process according to any of claims 5 to 7, wherein is a bisglycidyl ether based on bisphenols, in which the bisphenols are selected from the group of bisphenol A (CAS: 80-05-7), bisphenol AF (CAS: 1478-61-1), bisphenol AP (CAS: 1571-75-1), bisphenol B (CAS: 77-40-7), bisphenol BP (CAS: 1844-01-5), bisphenol C (CAS: 79-97-0), bisphenol C (CAS: 14868-03-2), bisphenol E (CAS: 2081-08-5), bisphenol F (CAS: 620-92-8), bisphenol FL (CAS: 3236-71-3), bisphenol G (CAS: 127-54-8), bisphenol M (CAS: 13595-25-0), bisphenol P (CAS: 2167-51-3), bisphenol PH (CAS: 24038-68-4), bisphenol S (CAS: 80-09-1), bisphenol TMC (CAS: 129188-99-4) and bisphenol Z (CAS: 843-55-0).

9. The process according to claim 5, wherein the epoxy compound (E) is selected from the group of tetraglycidylmethylenedianiline (TGMDA), epoxy novolaks and cycloaliphatic epoxy compounds.

10. The process according to claims 5 to 8, wherein the hardener (H) is selected from the group consisting of 1,3-diaminobenzene, 2,6-bis(aminomethyl)-piperidine, diethylenetriamine, triethylenetetramine, 4,4'-diaminodiphenyl sulfone, phthalic anhydride and hexahydroxyphthalic anhydride.

11. The process according to any of claims 1 to 12, wherein in process step a) a reinforcing material is additionally provided in the mold before the thermoset resin system is provided.

12. The process according to claim 11, wherein the thermoplastic polymer is applied to the reinforcing material.

13. The use of a thermoplastic polymer having a porosity of 10% to 90% for increasing the toughness of a thermoset, preferably for increasing the toughness of a thermoset molding, wherein the thermoplastic polymer is at least one polyarylene ether (P) formed from units of the general formula (I) 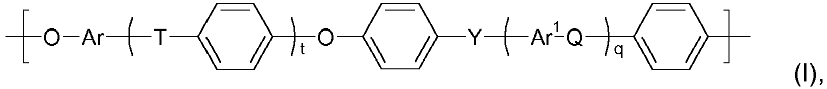 with the following definitions:
t, q: independently 0, 1, 2 or 3,
Q, T, Y: each independently a chemical bond or group selected from -O-, -S-, -SO₂-, S=O, C=O, -N=N-, -CR^{a}R^{b}- where R^{a} and R^{b} are each independently a hydrogen atom or a C₁-C₁₂-alkyl, C₁-C₁₂-alkoxy or C₆-C₁₈-aryl group, where at least one of Q, T and Y is different than -O-, and at least one of Q, T and Y is -SO₂- and
Ar, Ar¹: each independently an arylene group having from 6 to 18 carbon atoms.

## Revendications

1. Procédé de fabrication d'une pièce moulée duroplastique, comprenant les étapes suivantes :
a) la préparation d'un système de résine réticulable duroplastiquement dans un outil de moulage,
b) la réticulation du système de résine réticulable duroplastiquement préparé à l'étape a) dans l'outil de moulage en présence d'un polymère thermoplastique, qui présente une porosité de 10 à 90 %, pour obtenir la pièce moulée duroplastique,
c) l'extraction de la pièce moulée duroplastique de l'outil de moulage, **caractérisé en ce que** le polymère thermoplastique est au moins un éther de polyarylène (P), qui est formé par des constituants de la formule générale (I) : 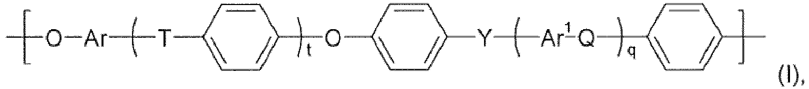 avec les significations suivantes :
t, q : indépendamment l'un de l'autre, 0, 1, 2 ou 3, Q, T, Y : chacun indépendamment les uns des autres, une liaison chimique ou un groupe choisi parmi -O-, -S-, - SO₂-, S=O, C=O, -N=N-, -CR^{a}R^{b}-, R^{a} et R^{b} représentant chacun indépendamment l'un de l'autre un atome d'hydrogène ou un groupe alkyle en C₁-C₁₂, alcoxy en C₁-C₁₂ ou aryle en C₆-C₁₈, au moins l'un parmi Q, T et Y étant différent de -O-, et au moins l'un parmi Q, T et Y représentant -SO₂-, et
Ar, Ar¹ : indépendamment l'un de l'autre, un groupe arylène de 6 à 18 atomes de carbone.

2. Procédé selon la revendication 1, **caractérisé en ce que** le système de résine réticulable duroplastiquement préparé à l'étape de procédé a) est choisi dans le groupe constitué par les systèmes de résine époxyde réticulables duroplastiquement, les systèmes de résine urée-formaldéhyde réticulables duroplastiquement, les systèmes de résine mélamine-formaldéhyde réticulables duroplastiquement, les systèmes de résine mélamine-phénol-formaldéhyde réticulables duroplastiquement, les systèmes de résine phénol-formaldéhyde réticulables duroplastiquement et les systèmes de résine bismaléinimide réticulables duroplastiquement.

3. Procédé selon la revendication 1 ou 2, **caractérisé en ce que** l'éther de polyarylène (P) comprend des groupes terminaux, au moins 60 % des groupes terminaux étant des groupes terminaux phénol, par rapport au nombre total de groupes terminaux de l'éther de polyarylène (P).

4. Procédé selon l'une quelconque des revendications 1 à 3, **caractérisé en ce que** le polymère thermoplastique est choisi dans le groupe constitué par les polyéther-sulfones (PESU), les polysulfones (PSU) et les polyphénylsulfones (PPSU).

5. Procédé selon l'une quelconque des revendications 1 à 4, **caractérisé en ce que** le système de résine réticulable duroplastiquement préparé à l'étape de procédé a) est un système de résine époxyde, qui contient les composants suivants :
(A) au moins un composé époxy (E), qui comprend au moins un groupe époxyde par molécule, et
(B) au moins un agent de durcissement (H).

6. Procédé selon la revendication 5, **caractérisé en ce que** le composé époxy (E) comprend au moins deux groupes époxyde par molécule.

7. Procédé selon la revendication 5 ou 6, **caractérisé en ce que** le composé époxy (E) est un éther de bisglycidyle à base de bisphénols selon la formule générale (II) : 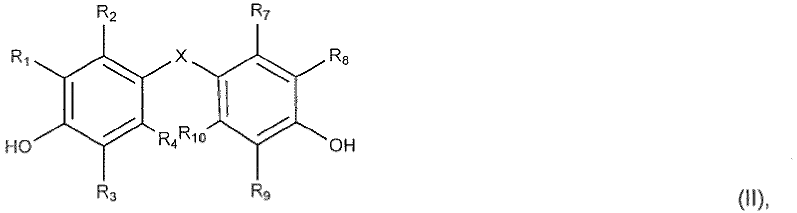 dans laquelle :
R¹ à R⁴ et R⁷ à R¹⁰ représentent indépendamment les uns des autres H, alkyle en C₁-C₆, aryle, halogène ou alcényle en C₂-C₁₀, R¹ à R⁴ et R⁷ à R¹⁰ pouvant également faire partie d'un système cyclique ;
X représente CR⁵R⁶ ou SO₂ ;
si X représente CR⁵R⁶, alors R⁵ et R⁶ représentent indépendamment l'un de l'autre H, halogène, alkyle en C₁-C₆, alcényle en C₂-C₁₀ ou aryle, ou R⁵ et R⁶ peuvent également faire partie d'un système cyclique.

8. Procédé selon l'une quelconque des revendications 5 à 7, **caractérisé en ce qu'**est un éther de bisglycidyle à base de bisphénols, dans lequel les bisphénols sont choisis dans le groupe constitué par le bisphénol A (n° CAS: 80-05-7), le bisphénol AF (n° CAS: 1478-61-1), le bisphénol AP (n° CAS: 1571-75-1), le bisphénol B (n° CAS: 77-40-7), le bisphénol BP (n° CAS: 1844-01-5), le bisphénol C (n° CAS: 79-97-0), le bisphénol C (n° CAS: 14868-03-2), le bisphénol E (n° CAS: 2081-08-5), le bisphénol F (n° CAS: 620-92-8), le bisphénol FL (n° CAS: 3236-71-3), le bisphénol G (n° CAS: 127-54-8), le bisphénol M (n° CAS: 13595-25-0), le bisphénol P (n° CAS: 2167-51-3), le bisphénol PH (n° CAS: 24038-68-4), le bisphénol S (n° CAS: 80-09-1), le bisphénol TMC (n° CAS: 129188-99-4) et le bisphénol Z (n° CAS: 843-55-0) .

9. Procédé selon la revendication 5, **caractérisé en ce que** le composé époxy (E) est choisi dans le groupe constitué par la tétraglycidylméthylène-dianiline (TGMDA), les époxy-novolaques et les composés d'époxyde cycloaliphatiques.

10. Procédé selon les revendications 5 à 8, **caractérisé en ce que** l'agent de durcissement (H) est choisi dans le groupe constitué par le 1,3-diaminobenzène, la 2,6-bis-(aminométhyl)pipéridine, la diéthylène-triamine, la triéthylène-tétramine, la 4,4'-diaminodiphénylsulfone, l'anhydride de l'acide phtalique et l'anhydride de l'acide hexahydroxyphtalique.

11. Procédé selon l'une quelconque des revendications 1 à 12, **caractérisé en ce qu'**une matière renforçante est en outre préparée dans l'outil de moulage à l'étape de procédé a) avant la préparation du système de résine duroplastique.

12. Procédé selon la revendication 11, **caractérisé en ce que** le polymère thermoplastique est appliqué sur la matière renforçante.

13. Utilisation d'un polymère thermoplastique, qui présente une porosité de 10 à 90 %, pour augmenter la résistance d'un duroplaste, de préférence pour augmenter la résistance d'une pièce moulée duroplastique, **caractérisée en ce que** le polymère thermoplastique est au moins un éther de polyarylène (P), qui est formé par des constituants de la formule générale (I) : 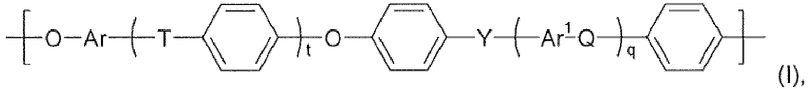 avec les significations suivantes :
t, q : indépendamment l'un de l'autre, 0, 1, 2 ou 3, Q, T, Y : chacun indépendamment les uns des autres, une liaison chimique ou un groupe choisi parmi -O-, -S-, - SO₂-, S=O, C=O, -N=N-, -CR^{a}R^{b}-, R^{a} et R^{b} représentant chacun indépendamment l'un de l'autre un atome d'hydrogène ou un groupe alkyle en C₁-C₁₂, alcoxy en C₁-C₁₂ ou aryle en C₆-C₁₈, au moins l'un parmi Q, T et Y étant différent de -O-, et au moins l'un parmi Q, T et Y représentant -SO₂-, et
Ar, Ar¹ : indépendamment l'un de l'autre, un groupe arylène de 6 à 18 atomes de carbone.
